# EUROPÄISCHE PATENTSCHRIFT

(11) **EP 2 721 699 B1**
(45) Veröffentlichungstag und Bekanntmachung des Hinweises auf die Patenterteilung: **09.12.2015**
(21) Anmeldenummer: 12742853.0
(22) Anmeldetag: 24.07.2012
(51) Int. Cl.: H02B 13/025, H01H 33/72

(54) **LICHTBOGENFREIRAUM FÜR SCHALTANLAGEN**
ARC EXPANSION SPACE FOR SWITCHBOARDS
ESPACE LIBRE D'EXPANSION D'ARC POUR TABLEAU DE COMMUTATION

(30) Priorität: 29.07.2011 DE 102011080136
(43) Veröffentlichungstag der Anmeldung: 23.04.2014
(73) Patentinhaber: Siemens Aktiengesellschaft, 80333 München (DE)
(72) Erfinder: AHLF, Gerd, 91369 Wiesenthau (DE); MÖRSCH, Michael, 91054 Erlangen (DE)
(86) Internationale Anmeldenummer: PCT/EP2012/064526
(87) Internationale Veröffentlichungsnummer: WO 2013/017484

(56) Entgegenhaltungen:
- EP-B1- 1 644 948
- DE-A1- 1 954 066
- DE-B3-102007 001 656
- DE-B4-102008 047 281

## Beschreibung

Die Erfindung betrifft ein Freiraummodul zur Aufnahme von durch Ausblasen eines Lichtbogens entstehenden Schaltgasen, eine Schaltanlage sowie ein Unterseeboot.

Ein derartiges Freiraummodul kommt bei Schaltanlagen zum Einsatz, bei denen durch Leistungsschalter z.B. im Falle eines Kurzschlusses die Stromführung unterbrochen wird, wodurch sich ein Lichtbogen ausbilden kann, der - bzw. die durch das Ausblasen des Lichtbogens entstehenden Schaltgase - in einen dafür vorgesehenen Lichtbogenfreiraum geleitet wird. Derartige Schaltanlagen kommen auf vielen Anwendungsgebieten vor, insbesondere aber auf dem Gebiet der Marinetechnik.

An Schaltanlagen auf Schiffen, insbesondere auf Unterwasserschiffen, werden sehr hohe Anforderungen hinsichtlich Betriebsverhalten, Funktionssicherheit und Zuverlässigkeit bei den speziellen Betriebsbedingungen (z.B. Schockfestigkeit, Vibrationssicherheit, EMV etc.) gestellt. Aufgrund des auf Schiffen, insbesondere auf Unterwasserschiffen, nur begrenzt zur Verfügung stehenden Einbauraumes müssen die Schaltanlagen eine möglichst kleine Baugröße aufweisen. Weiterhin besteht die Anforderung an ein möglichst geringes Gewicht. Für eine geschlossene Ausführung in der bisherigen Bauweise wird relativ viel Volumen und somit auch Gewicht benötigt.

In der bisherigen Bauweise sind Schaltanlagen bzw. Schalttafeln für Unterwasserschiffe in einer Gerüst-Schweißkonstruktion mit einer geschlossenen Frontseite und geschlossenen Seitenteilen ausgeführt. Die offene Rückseite zeigt zur Bördwand und nutzt das dadurch geschaffene Volumen als Lichtbogenfreiraum und für die Wartung und Instandsetzung.

Eine andere Ausführung einer Leistungsschalteinrichtung ist aus DE 10 2008 047 281 B4 bekannt, bei der der Lichtbogenfreiraum zumindest zum Teil durch einen Sack aus hitzebeständigem Faserstoff gebildet ist. Hierdurch wird der benötigte Lichtbogenfreiraum reduziert, da dieser durch den Sack auf einen Bereich im Wesentlichen in Ausblasrichtung beschränkt wird, wodurch auch ein Schaltschrank zur Kapselung des Leistungsschalters entbehrlich sein kann.

Aus der DE 195 20 698 A1 ist eine Schaltanlage mit zumindest einem gekapselten elektrischen Funktionsmodul, mit einem gekapselten Störfallmodul mit zumindest einer Dämpfmaterial enthaltenden Dämpfpatrone und mit zumindest einem über ein Störfall-Druckentlastungselement an das elektrische Funktionsmodul angeschlossenen Druckentlastungskanal bekannt.

Weiter ist aus der DE 10 2007 001 656 B3 ein Schaltschrank bekannt, in dem mindest ein Trennschalter zum Trennen einer elektrischen Leitungsverbindung zu einer Batterie angeordnet ist und der mindestens eine umlaufende flexible Fuge aufweist, wobei die Fuge einen mit einem Druckkörper verbundenen Teil des Schaltschranks mit einem dazu beweglich gelagerten Teil verbindet. Eine Seitenwand des Schaltschranks ist von einer Glasfasermatte gebildet, die einem Lichtbogen und verflüssigtem Material der Trennkontakte standhaltet.

Zudem ist aus der DE 19 54 066 A1 eine elektrische Kontaktanordnung zur Unterbrechung eines Stromkreises unter Lichtbogenbildung mit einer in der gewollten Wanderungsrichtung des Lichtbogens befindlichen Wand bekannt, bei der im Weg der von dem Lichtbogen in dessen Wanderungsrichtung ausgehenden Druckwelle ein Körper zur winkligen Reflexion und/oder Dämpfung der Druckwelle angeordnet ist.

Der Erfindung liegt die Aufgabe zugrunde, eine kompakte Schaltanlage mit Lichtbogenfreiraum anzugeben, die insbesondere bei Unterwasserschiffen mit Vorteil eingesetzt werden kann.

Diese Aufgabe wird gelöst durch ein Freiraummodul zur Aufnahme von durch Ausblasen zumindest eines Lichtbogens entstehenden Schaltgasen mit zumindest zwei gegenüberliegenden Seitenteilen und einem diese verbindenden Deckenteil, an dem ein Vorhang aus elektrisch isolierendem, druck- und lichtbogenbeständigem Material befestigt ist, durch den eine Reflexion von auf den Vorhang geleiteten Schaltgasen im Vergleich zu einer Reflexion von einem starren Medium reduzierbar ist.

Der Vorhang ist von zumindest einem Seitenteil aus in Richtung des gegenüberliegenden Seitenteils bewegbar.

Die Aufgabe wird weiter gelöst durch eine Schaltanlage sowie durch ein Unterwasserschiff mit den in den Ansprüchen 13 bzw. 18 angegebenen Merkmalen.

Durch die erfindungsgemäße Verwendung des isolierenden Vorhangs kann der benötigte Lichtbogenfreiraum auf ein Mindestmaß - abhängig von der abzuschaltenden Kurzschlussleistung - reduziert werden. Durch die vorteilhafte Ausgestaltung der Abschottung mit dem in sich etwas elastischen Vorhang wird die Reflexion der Schaltgase verhindert bzw. reduziert, so dass im Vergleich zu Isolierstoffplatten geringere Abstände möglich sind. Der Zugang für Wartung oder Instandsetzung kann durch den Vorhang auch viel einfacher und schneller erfolgen als mit Isolierstoffplatten. Dies kann insbesondere bei den gegebenen Bedingungen an Bord und der Aufgabe von Unterwasserschiffen von entscheidendem Vorteil im Einsatzfall sein.

Zumindest ein erfindungsgemäßes Freiraummodul bildet zusammen mit zumindest einer Schalteinheit mit zumindest einem Leistungsschalter und einer Lichtbogenkammer, wobei hierdurch entstehende Schaltgase auf den Vorhang des Freiraummoduls leitbar sind, eine erfindungsgemäße Schaltanlage. Dabei kann die zumindest eine Schalteinheit an nur einer Seite des zumindest einen Freiraummoduls angeordnet sein, wobei die der Schalteinheit(en) abgewandte Seite des zumindest einen Freiraummoduls vorteilhafterweise mit einer Rückwand versehen wird. Es können sich aber auch in besonders vorteilhafter Weise zumindest zwei Schalteinheiten (Schalttafeleinheiten) mit ihrer Rückseite gegenüberstehen mit dem zumindest einen Freiraummodul in ihrer Mitte. Die Abschottung der beiden Lichtbogenfreiräume der Schalttafeleinheiten gegeneinander erfolgt durch den isolierenden Vorhang aus lichtbogenbeständigem Material. Dieses Material muss außerdem dem bei einer Kurzschlussabschaltung entstehenden hohen Druck durch Schaltgase standhalten.

Üblicherweise handelt es sich um eine Gleichstrom-Schaltanlage, bestehend aus Schalteinheiten mit mindestens je einem Gleichstrom-Leistungsschalter, wie sie beispielsweise für das Fahranlagen- und Bordnetz von Unterwasserschiffen verwendet werden. Prinzipiell ist aber ein Einsatz in Wechselstromanlagen ebenfalls denkbar.

In einem erfindungsgemäßen Unterwasserschiff macht sich der reduzierte Platzbedarf der erfindungsgemäßen Schaltanlage aufgrund des nur begrenzt vorhandenen Einbauraumes besonders vorteilhaft bemerkbar.

Erfindungsgemäß ist der Vorhang von zumindest einem Seitenteil aus in Richtung des gegenüberliegenden Seitenteils bewegbar. Dies kann beispielsweise wie bei aus dem privaten Bereich bekannten Vorhängen durch eine Führungsschiene im Deckenteil realisiert sein. Auf diese Weise kann der Vorhang z.B. für Wartungsarbeiten an den eingebauten Leistungsschaltern oder an der Schaltanlage einfach zurückgeschoben werden.

In einer weiteren vorteilhaften Ausführungsform ist eine ordnungsgemäße Anordnung des Vorhangs zwischen den Seitenteilen mittels zumindest eines Sensors detektierbar. Somit wird die für einen ordnungsgemäßen Betrieb des Freiraummoduls notwendige Anordnung des Vorhangs (hinreichend ausgezogen, Abschottung der Lichtbogenfreiräume gegeben) durch zumindest einen entsprechenden Sensor überwacht. Dabei kann z.B. ein Berührungssensor am zumindest einen verschiebbaren Ende detektieren, ob der Vorhang zumindest im Wesentlichen vollständig ausgezogen ist, oder es kann ein optischer Sensor eingesetzt werden, der beispielsweise über eine Lichtschranke das Vorhandensein des Vorhangs feststellen kann. Die eingesetzten Sensoren sind dabei den herrschenden Bedingungen entsprechend robust auszuführen. Das Ergebnis der Überwachung kann optisch angezeigt werden, oder es kann durch ein optisches und/oder akustisches Warn- oder Alarmsignal darauf hingewiesen werden, dass der Vorhang nicht hinreichend ausgezogen ist. Alternativ oder zusätzlich kann auch ein entsprechendes Signal über einen potentialfreien Kontakt (z.B. ein Relais) einer zentralen Automatisierung bzw. Überwachung zur Verfügung gestellt werden.

In einer weiteren vorteilhaften Ausführungsform ist der Vorhang zumindest teilweise an einem die Seitenteile verbindenden Unterteil befestigbar. Hierdurch können zu heftige Bewegungen des Vorhangs vermieden werden, insbesondere wenn mehrere Leistungsschalter innerhalb kurzer Zeit öffnen. Dabei kann der Vorhang straff zwischen Deckenteil und Unterteil eingespannt sein, vorteilhafterweise behält er aber etwas Spiel, vor allem, wenn der Vorhang bewegbar ausgeführt ist. Die Führung im Unterteil kann dabei ebenfalls über eine Führungsschiene erfolgen.

In einer weiteren vorteilhaften Ausführungsform ist dabei am Unterteil ein elektrisch isoliertes Seil vorgesehen, an dem der Vorhang mittels Ösen befestigbar ist, wobei die Ösen durch ein lichtbogenbeständiges Material abgedeckt sind und/oder das Seil in einem Kanal angeordnet ist. Hierdurch ist eine einfache Führung gewährleistet, wobei die Abdeckung der Ösen beispielsweise durch herunterhängende Abdeckstreifen realisiert sein kann.

In einer weiteren vorteilhaften Ausführungsform ist am Deckenteil ein elektrisch isoliertes Seil vorgesehen, an dem der Vorhang mittels Ösen befestigt ist, wobei die Ösen durch ein lichtbogenbeständiges Material abgedeckt sind und/oder das Seil in einem Kanal angeordnet ist. Hierdurch ist eine einfache Führung gewährleistet, wobei die Abdeckung der Ösen beispielsweise durch herunterhängende Abdeckstreifen realisiert sein kann.

In einer weiteren vorteilhaften Ausführungsform ist zumindest eine verschließbare Öffnung vorgesehen, durch die das Freiraummodul betretbar ist. Insbesondere bei geschlossen ausgeführten Schaltanlagen - beispielsweise bei sich gegenüberstehenden Schalteinheiten mit dazwischenliegendem Freiraummodul - ist ein solcher Zugang für Wartungs- oder Instandsetzungsarbeiten (insbesondere an den Schalteinheiten) vonnöten. Dieser kann beispielsweise durch eine Doppeltür in einem Seitenteil erfolgen.

In einer weiteren vorteilhaften Ausführungsform ist dabei mittels zumindest eines Sensors detektierbar, ob die Öffnung verschlossen ist. Das Ergebnis der Überwachung kann optisch angezeigt werden, oder es kann durch ein optisches und/oder akustisches Warn- oder Alarmsignal darauf hingewiesen werden, dass die Öffnung nicht geschlossen ist. Alternativ oder zusätzlich kann auch ein entsprechendes Signal über einen potentialfreien Kontakt (z.B. ein Relais) einer zentralen Automatisierung bzw. Überwachung zur Verfügung gestellt werden. In Kombination mit einem Sensor zur Überwachung der ordnungsgemäßen Anordnung des Vorhangs ist auch eine Ausführung möglich, bei der das Warn- oder Alarmsignal des "Vorhang-Sensors" unterdrückt wird, wenn die Öffnung nicht verschlossen ist, da in diesem Fall davon ausgegangen werden kann, dass das Freiraummodul zu Wartungs- oder Instandsetzungsarbeiten betreten wird und hierzu der Vorhang zurückgezogen wird.

In einer weiteren vorteilhaften Ausführungsform weist das Freiraummodul zumindest ein Überdruckventil auf. Durch die plötzliche Erhitzung der Luft bei Entstehen eines Lichtbogens dehnt sich diese stark aus, so dass je nach zu erwartender Kurzschlussleistung es angeraten sein kann, etwaigen entstehenden Überdruck aus Sicherheitsgründen über entsprechende Ventile abzuführen.

In einer weiteren vorteilhaften Ausführungsform weist der Vorhang zumindest teilweise eine zumindest einseitige Beschichtung aus hitzebeständigem Polyurethan auf. Hierdurch werden die Materialeigenschaften wie z.B. die Haltbarkeit des Vorhangs verbessert.

In einer weiteren vorteilhaften Ausführungsform ist der Vorhang im Saumbereich durch hitzeisolierende Glasgewebestreifen verstärkt. Hierdurch wird insbesondere die Druckbeständigkeit im Bereich der Ösen (und damit ebenfalls die Haltbarkeit) verbessert.

In einer weiteren vorteilhaften Ausführungsform weist der Vorhang ein Nähgarn aus SiO₂ und/oder Kevlar auf. Diese Materialien haben sich für die Nähte (die zumindest zur Anbringung der Befestigungsmittel, z.B. der Ösen, notwendig sind) bestens bewährt.

In einer vorteilhaften Form der Ausgestaltung sind das zumindest eine Freiraummodul und die zumindest eine Schalteinheit derart miteinander verbindbar, dass eine gewünschte Schutzart erreichbar ist. Insbesondere bei einem Einsatz auf Unterwasserschiffen ist eine beispielsweise zumindest staub- und spritzwassergeschützte Ausführung (IP54) von Vorteil. In einer weiteren vorteilhaften Ausführungsform sind das zumindest eine Freiraummodul und die zumindest eine Schalteinheit als eine bauliche Einheit ausgeführt. Dies ermöglicht beispielsweise auch die Verwendung von durchgehenden Seitenteilen für Schalteinheit und Freiraummodul.

In einer weiteren vorteilhaften Ausführungsform ist zumindest eine Schalteinheit als Aluminium-Steckgerüst ausgeführt. Ein solches ist nicht nur leichter zu fertigen, sondern ist vorteilhafterweise besonders leicht und amagnetisch.

In einer weiteren vorteilhaften Ausführungsform ist zumindest eine Schalteinheit als Gerüst-Schweißkonstruktion ausgeführt. Eine solche ist zwar aufwendiger und schwerer als ein Aluminium-Steckgerüst, weist dafür jedoch eine höhere Schockfestigkeit auf. Zudem sind hiermit kleinere Abmessungen möglich, so dass diese Ausführungsform insbesondere für einen Einsatz in Unterwasserschiffen Vorteile bietet.

Im Folgenden wird die Erfindung anhand der in den Figuren dargestellten Ausführungsbeispiele näher beschrieben und erläutert. Es zeigen:
- FIG 1: eine erfindungsgemäße Schaltanlage in Draufsicht,
- FIG 2: dieselbe Schaltanlage in Vorderansicht mit geschlossener Öffnung,
- FIG 3: dieselbe Ansicht wie Fig 2 mit geöffneten Türen.

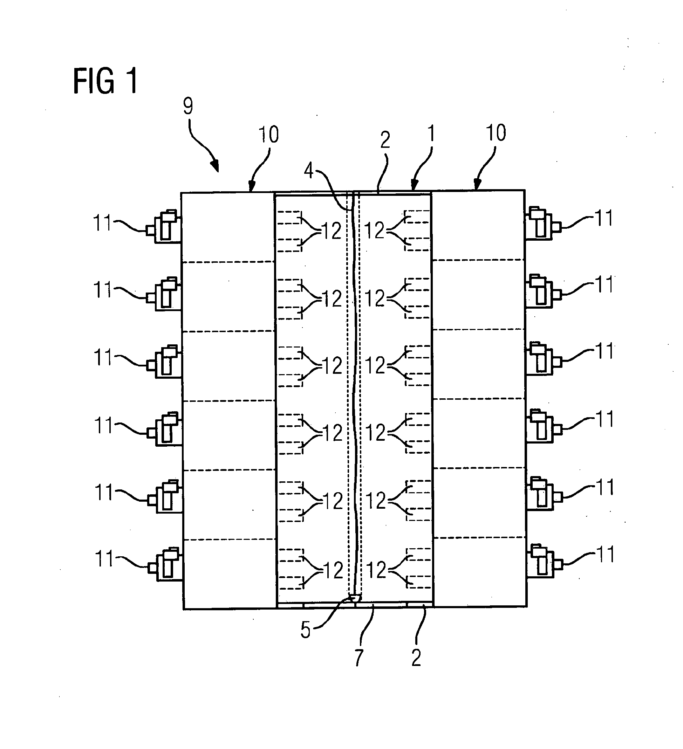

Fig 1 zeigt eine schematische Darstellung in Draufsicht einer erfindungsgemäßen Schaltanlage 9 aus zwei Schalteinheiten 10, die sich mit ihren Rückseiten gegenüberstehen, und einem dazwischenliegenden Freiraummodul 1. Die Schalteinheiten 10 weisen jeweils mehrere Leistungsschalter 11 (wobei nur der Antrieb des Schalters zu sehen ist) sowie zugehörige Lichtbogenkammern 12 auf. Das Freiraummodul 1 wird gebildet durch zwei Seitenteile 2 und einem hier nicht gezeigten Deckenteil, an dem ein elektrisch isolierender Vorhang 4 aus einem lichtbogenbeständigen Material befestigt ist. Dieses Material muss außerdem dem bei einer Kurzschlussabschaltung entstehenden hohen Druck durch Schaltgase standhalten. Der Zugang in das Schalttafelinnere erfolgt durch eine mittels einer Doppeltür verschließbaren Öffnung 7.

Für Wartungsarbeiten an den eingebauten Leistungsschaltern 11 oder an der Schaltanlage 9 kann der Vorhang 4 zurückgeschoben werden. Die ordnungsgemäße Anordnung des Vorhangs 4 für den Betrieb (ausgezogen, Abschottung der Lichtbogenfreiräume gegeben) wird durch zumindest einen Sensor 5 überwacht. Das Ergebnis der Überwachung kann optisch angezeigt werden, oder es kann durch ein optisches und/oder akustisches Alarmsignal darauf hingewiesen werden, dass der Vorhang 4 nicht hinreichend ausgezogen ist. Alternativ oder zusätzlich kann auch ein entsprechendes Signal über einen potentialfreien Kontakt (z.B. ein Relais) einer zentralen Automatisierung bzw. Überwachung zur Verfügung gestellt werden.

Die Schaltanlage 9 - üblicherweise eine Gleichstrom-Schaltanlage 9 mit Gleichstrom-Leistungsschaltern 11, beispielsweise für den Einsatz in Unterwasserschiffen - kann dabei als Gerüst-Schweißkonstruktion oder auch als Aluminium-Steckgerüst ausgeführt sein. Ein Einsatz in Wechselstromanlagen ist natürlich ebenfalls denkbar.

Durch die Verwendung des isolierenden Vorhangs 4 kann der benötigte Lichtbogenfreiraum auf ein Mindestmaß - abhängig von der abzuschaltenden Kurzschlussleistung - reduziert werden. Durch die vorteilhafte Ausgestaltung der Abschottung mit dem in sich etwas elastischen Vorhang 4 wird die Reflexion der Schaltgase verhindert bzw. reduziert, so dass im Vergleich zu Isolierstoffplatten geringere Abstände möglich sind. Der Zugang für Wartung oder Instandsetzung kann durch den Vorhang auch viel einfacher und schneller erfolgen als mit Isolierstoffplatten.

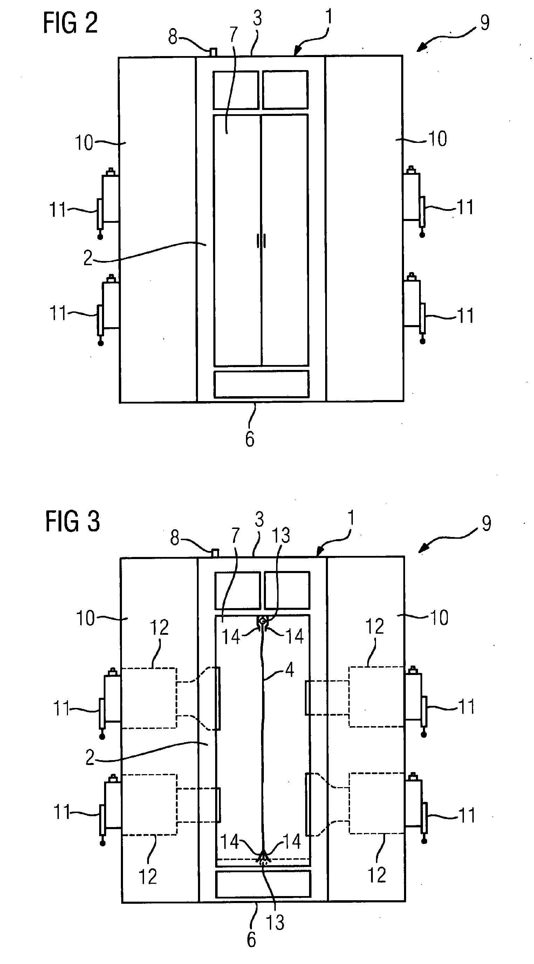

Fig 2 zeigt die Schaltanlage 9 aus Fig 1 in einer Vorderansicht mit durch eine Doppeltür geschlossener Öffnung 7. Hier sind nun auch das Deckenteil 3 und ein Unterteil 6 dargestellt sowie ein Überdruckventil 8, durch das sichergestellt wird, dass der Druck im Freiraummodul 1 durch die bei einer Kurzschlussabschaltung entstehenden Schaltgase nicht zu hoch werden kann. Für eine Erläuterung der weiteren Bezugszeichen s. Fig 1.

Fig 3 zeigt dieselbe Ansicht wie in Fig 2, nur dass in dieser Figur die Öffnung 7 nicht durch die Doppeltüren verschlossen ist. Hier ist also der Blick auf den Vorhang 4 frei, der durch Führungen am Deckenteil 3 sowie am Unterteil 6 verschiebbar ist. Zu erkennen sind hier auch die Ösen 13, die auf das elektrisch isolierte Seil (das z.B. mit einem elektrisch isolierenden Überzug versehen ist) aufgesteckt sind, sowie die Abdeckungen 14 derselben aus lichtbogenbeständigem Material. In dieser Darstellung zusätzlich zur vorangegangenen Figur gestrichelt gezeigt sind die Lichtbogenkammern 12, durch die die bei Abschaltung der Leistungsschalter 11 entstehenden Schaltgase auf den Vorhang 4 geleitet werden.

Zusammenfassend betrifft die Erfindung ein Freiraummodul zur Aufnahme von durch Ausblasen eines Lichtbogens entstehenden Schaltgasen, eine Schaltanlage sowie ein Unterseeboot. Um eine kompakte Schaltanlage mit Lichtbogenfreiraum anzugeben, die insbesondere bei Unterwasserschiffen mit Vorteil eingesetzt werden kann, wird ein Freiraummodul vorgeschlagen zur Aufnahme von durch Ausblasen zumindest eines Lichtbogens entstehenden Schaltgasen mit zumindest zwei gegenüberliegenden Seitenteilen und einem diese verbindenden Deckenteil, an dem ein Vorhang aus elektrisch isolierendem, druck- und lichtbogenbeständigem Material befestigt ist, durch den eine Reflexion von auf den Vorhang geleiteten Schaltgasen im Vergleich zu einer Reflexion von einem starren Medium reduzierbar ist.

## Patentansprüche

1. Freiraummodul (1) zur Aufnahme von durch Ausblasen zumindest eines Lichtbogens entstehenden Schaltgasen mit zumindest zwei gegenüberliegenden Seitenteilen (2) und einem diese verbindenden Deckenteil (3), an dem ein Vorhang (4) aus elektrisch isolierendem, druck- und lichtbogenbeständigem Material befestigt ist, durch den eine Reflexion von auf den Vorhang geleiteten Schaltgasen im Vergleich zu einer Reflexion von einem starren Medium reduzierbar ist, wobei der Vorhang (4) von zumindest einem Seitenteil (2) aus in Richtung des gegenüberliegenden Seitenteils (2) bewegbar ist.

2. Freiraummodul nach Anspruch 1, wobei eine ordnungsgemäße Anordnung des Vorhangs (4) zwischen den Seitenteilen (2) mittels zumindest eines Sensors (5) detektierbar ist.

3. Freiraummodul nach Anspruch 1 oder 2, wobei der Vorhang (4) zumindest teilweise an einem die Seitenteile (2) verbindenden Unterteil (6) befestigbar ist.

4. Freiraummodul nach Anspruch 3, wobei am Unterteil (6) ein elektrisch isoliertes Seil vorgesehen ist, an dem der Vorhang (4) mittels Ösen (13) befestigbar ist, wobei die Ösen (13) durch ein lichtbogenbeständiges Material (14) abgedeckt sind und/oder das Seil in einem Kanal angeordnet ist.

5. Freiraummodul nach einem der vorhergehenden Ansprüche, wobei am Deckenteil (3) ein elektrisch isoliertes Seil vorgesehen ist, an dem der Vorhang (4) mittels Ösen (13) befestigt ist, wobei die Ösen (13) durch ein lichtbogenbeständiges Material (14) abgedeckt sind und/oder das Seil in einem Kanal angeordnet ist.

6. Freiraummodul nach einem der vorhergehenden Ansprüche, wobei zumindest eine verschließbare Öffnung (7) vorgesehen ist, durch die das Freiraummodul (1) betretbar ist.

7. Freiraummodul nach Anspruch 6, wobei mittels zumindest eines Sensors detektierbar ist, ob die Öffnung verschlossen ist.

8. Freiraummodul nach einem der vorhergehenden Ansprüche mit zumindest einem Überdruckventil (8).

9. Freiraummodul nach einem der vorhergehenden Ansprüche, wobei der Vorhang (4) zumindest teilweise eine zumindest einseitige Beschichtung aus hitzebeständigem Polyurethan aufweist.

10. Freiraummodul nach einem der vorhergehenden Ansprüche, wobei der Vorhang (4) im Saumbereich durch hitzeisolierende Glasgewebestreifen verstärkt ist.

11. Freiraummodul nach einem der vorhergehenden Ansprüche, wobei der Vorhang (4) ein Nähgarn aus SiO₂ und/oder Kevlar aufweist.

12. Schaltanlage (9) aus zumindest einem Freiraummodul (1) nach einem der vorhergehenden Ansprüche und einer Schalteinheit (10) mit zumindest einem Leistungsschalter (11) und einer Lichtbogenkammer (12), wobei entstehende Schaltgase auf den Vorhang (4) des Freiraummoduls (1) leitbar sind.

13. Schaltanlage nach Anspruch 12, wobei das zumindest eine Freiraummodul (1) und die zumindest eine Schalteinheit (10) derart miteinander verbindbar sind, dass eine gewünschte Schutzart erreichbar ist.

14. Schaltanlage nach Anspruch 12 oder 13, wobei das zumindest eine Freiraummodul (1) und die zumindest eine Schalteinheit (10) als eine bauliche Einheit ausgeführt sind.

15. Schaltanlage nach einem der Ansprüche 12 bis 14, wobei zumindest eine Schalteinheit (10) als Aluminium-Steckgerüst ausgeführt ist.

16. Schaltanlage nach einem der Ansprüche 12 bis 15, wobei zumindest eine Schalteinheit (10) als Gerüst-Schweißkonstruktion ausgeführt ist.

17. Unterwasserschiff mit zumindest einer Schaltanlage (9) nach einem der Ansprüche 12 bis 16.

## Claims

1. Gap module (1) for receiving switching gases caused by the discharge of at least one arc having at least two opposing lateral parts (2) and a cover part (3) connecting the same, to which a projection (4) made of electrically insulating, pressure and arc-resistant material is fastened, by means of a which a reflection of switching gases conducted onto the projection can be reduced by comparison with a reflection of a rigid medium, wherein the projection (4) can be moved from at least one lateral part (2) in the direction of the opposing lateral part (2).

2. Gap module according to claim 1,
wherein a correct arrangement of the projection (4) between the lateral parts (2) can be detected by means of at least one sensor (5).

3. Gap module according to claim 1 or 2, wherein the projection (4) can be fastened at least partly to a lower part (6) connecting the lateral parts (2).

4. Gap module according to claim 3,
wherein an electrically insulated cable is provided on the lower part (6), to which the projection (4) can be fastened by means of eyelets (13), wherein the eyelets (13) are covered by an arc-resistant material (14) and/or the cable is arranged in a channel.

5. Gap module according to one of the preceding claims,
wherein an electrically insulated cable is provided on the cover part (3), to which the projection (4) is fastened by means of eyelets (13), wherein the eyelets (13) are covered by an arc-resistant material (14) and/or the cable is arranged in a channel.

6. Gap module according to one of the preceding claims,
wherein at least one sealable opening (7) is provided, through which the gap module (1) can be accessed.

7. Gap module according to claim 6, wherein at least one sensor can detect whether the opening is closed.

8. Gap module according to one of the preceding claims, having at least one overpressure valve (8).

9. Gap module according to one of the preceding claims,
wherein the projection (4) at least partly comprises an at least one-sided coating made of heat-resistant polyurethane.

10. Gap module according to one of the preceding claims,
wherein the projection (4) is strengthened in the seam area by heat-insulating fibreglass strips.

11. Gap module according to one of the preceding claims,
wherein the projection (4) has a thread made of ***SiO₂*** and/or Kevlar.

12. Switching system (9) made of at least one gap module (1) according to one of the preceding claims and a switching unit (10) having at least one circuit breaker (11) and an arc chamber (12), wherein switching gases arising can be conducted onto the projection (4) of the gap module (1).

13. Switching system according to claim 12,
wherein the at least one gap module (1) and the at least one switching unit (10) can be connected to one another such that a desired type of protection can be achieved.

14. Switching system according to claim 12 or 13,
wherein the at least one gap module (1) and the at least one switching unit (10) are embodied as a structural unit.

15. Switching system according to one of claims 12 to 14,
wherein at least one switching unit (10) is embodied as an aluminium plug-in frame.

16. Switching system according to one of claims 12 to 15,
wherein at least one switching unit (10) is embodied as a welded frame construction.

17. Submarine having at least one switching system (9) according to one of claims 12 to 16.

## Revendications

1. Module ( 1 ) d'espace libre pour l'absorption de gaz de commutation se créant par soufflage d'au moins un arc électrique, comprenant au moins deux parties ( 2 ) latérales opposées et une partie ( 3 ) de couvercle les reliant à laquelle est fixé un rideau ( 4 ) en matière isolante électriquement, résistant à la pression et résistant à l'arc électrique, par lequel une réflexion de gaz de commutation conduits sur le rideau peut être réduite par rapport à une réflexion par un milieu rigide, le rideau ( 4 ) pouvant être déplacé d'au moins une partie ( 2 ) latérale en direction de la partie ( 2 ) latérale opposée.

2. Module d'espace libre suivant la revendication 1, dans lequel un bon agencement du rideau ( 4 ) entre les parties ( 2 ) latérales peut être détecté au moyen d'un capteur ( 5 ).

3. Module d'espace libre suivant la revendication 1 ou 2, dans lequel le rideau ( 4 ) peut être fixé au moins en partie à une partie ( 6 ) inférieure reliant les parties ( 2 ) latérales.

4. Module d'espace libre suivant la revendication 3, dans lequel il est prévu sur la partie ( 6 ) inférieure un câble isolé électriquement, auquel le rideau ( 4 ) peut être fixé au moyen d'oeillets ( 13 ), les oeillets ( 13 ) étant recouverts d'une matière ( 14 ) résistant à l'arc électrique et/ou le câble est mis dans un canal.

5. Module d'espace libre suivant l'une des revendications précédentes, dans lequel, sur la partie ( 3 ) de couvercle est prévu un câble isolé électriquement, auquel le rideau ( 4 ) est fixé au moyen d'oeillets ( 13 ), les oeillets ( 13 ) étant recouverts d'une matière ( 14 ) résistant à l'arc électrique et/ou le câble étant mis dans un canal.

6. Module d"espace libre suivant l'une des revendications précédentes, dans lequel il est prévu au moins une ouverture ( 7 ) qui peut être fermée et par laquelle le module ( 1 ) d'espace libre peut passer.

7. Module d'espace libre suivant la revendication 6, dans lequel il peut être détecté au moyen d'au moins un capteur si l'ouverture est fermée.

8. Module d'espace libre suivant l'une des revendications précédentes, comprenant au moins une soupape ( 8 ) de surpression.

9. Module d'espace libre suivant l'une des revendications précédentes, dans lequel le rideau ( 4 ) a au moins en partie un revêtement au moins sur une face en polyuréthane résistant à la chaleur.

10. module d'espace libre suivant l'une des revendications précédentes, dans lequel le rideau ( 4 ) est renforcé dans la région de la bordure par des bandes de tissu de verre résistant à la chaleur.

11. Module d'espace libre suivant l'une des revendications précédentes, dans lequel le rideau ( 4 ) a un fil de couture en SiO₂ et/ou en Kevlar.

12. Installation ( 9 ) de distribution, composée d'au moins un module ( 1 ) d'espace libre suivant l'une des revendications précédentes et d'une unité ( 10 ) de coupure, ayant au moins un disjoncteur ( 11 ) et une chambre ( 12 ) d'arc électrique, des gaz de commutation se produisant pouvant être conduits sur le rideau ( 4 ) du module ( 1 ) d'espace libre.

13. Installation de distribution suivant la revendication 12, dans laquelle le au moins un module ( 1 ) d'espace libre et la au moins une unité ( 10 ) de coupure peuvent être reliés l'un à l'autre de manière à obtenir un type de protection souhaité.

14. Installation de distribution suivant la revendication 12 ou 13, dans lequel le au moins un module ( 1 ) d'espace libre et la au moins une unité de coupure sont réalisés sous la forme d'une unité de construction.

15. Installation de distribution suivant l'une des revendications 12 à 14, dans lequel au moins une unité ( 10 ) de coupure est réalisée sous la forme d'une structure à enficher en aluminium.

16. Installation de distribution suivant l'une des revendications 12 à 15, dans lequel au moins une unité ( 10 ) de coupure est réalisée sous la forme d'une construction soudée de structure.

17. Sous-marin ayant au moins une installation ( 9 ) de distribution suivant l'une des revendications 12 à 16.
